# EUROPÄISCHE PATENTSCHRIFT

(11) **EP 3 088 297 B1**
(45) Veröffentlichungstag und Bekanntmachung des Hinweises auf die Patenterteilung: **22.11.2017**
(21) Anmeldenummer: 16167684.6
(22) Anmeldetag: 29.04.2016
(51) Int. Cl.: B63J 3/00, F02G 5/02, H02P 9/42, H02J 9/06

(54) **VORRICHTUNG ZUR NUTZUNG DER ABGASWÄRME EINES SCHIFFSANTRIEBES**
DEVICE FOR USING THE WASTE HEAT OF A SHIP PROPULSION SYSTEM
DISPOSITIF D'EXPLOITATION DE LA CHALEUR DE GAZ D'ECHAPPEMENT D'UNE PROPULSION DE NAVIRE

(30) Priorität: 29.04.2015 DE 102015005400
(43) Veröffentlichungstag der Anmeldung: 02.11.2016
(73) Patentinhaber: Wärtsilä SAM Electronics GmbH, 22763 Hamburg (DE)
(72) Erfinder: Knirsch, Hermann, 22767 Hamburg (DE)
(74) Vertreter: Hoffmann Eitle

(56) Entgegenhaltungen:
- EP-A1- 0 257 385
- EP-A2- 2 110 310
- DE-A1-102013 210 255

## Beschreibung

Die vorliegende Erfindung betrifft eine Vorrichtung zum Schiffsantrieb mit einem Dieselmotor, der mit einer Schiffsantriebswelle in Drehverbindung steht sowie mit einem Generator. Dabei steht der Generator durch einen Motor-Umrichter und durch einen Bordnetz-Umrichter, mit einem Gleichspannungs-Zwischenkreis dazwischen, mit dem Bordnetz in Verbindung und speist entweder Energie ins Bordnetz ein, oder er unterstützt als Hilfsmotor, vom Bordnetz versorgt, den Dieselmotor. Eine solche Vorrichtung hat zudem eine vom Abgas des Dieselmotors gespeiste Abgasturbine und/oder eine von seiner Abwärme gespeiste Dampfturbine, die einen Turbogenerator antreiben.

Moderne Dieselmotoren für Schiffsantriebe haben Wirkungsgrade von ungefähr 50%. Etwa 25% der Primärenergie geht in der Abgaswärme verloren. Die Rückgewinnung dieser Energie wird schon seit Jahrzehnten erfolgreich verwirklicht. So kann im Schiffsbetrieb diese Energie zur Speisung des Bordnetzes genutzt werden oder auch mit einem sogenannten Booster-Motor die Welle zusätzlich antreiben.

DE 10 2013 210255 A1 beschreibt eine Vorrichtung zum Schiffsantrieb gemäß dem Oberbegriff von Anspruch 1 dieser Anmeldung. EP 0 257 385 A1 beschreibt ebenfalls eine solche Vorrichtung, allerdings wird dabei der Turbogenerator durch Abgase vom Dieselaggregat angetrieben.

Die dabei betriebsbedingten Energieschwankungen der Turbinen sind jedoch im Bordnetz nicht gewünscht. Darum werden üblicherweise zusätzliche Regelventile eingesetzt, um den Turbinengenerator nicht mit zu schnellen Lastschwankungen zu betreiben. Nachteilig sind dabei aber die Wirkungsgradverluste, die die Druckverluste an den Regelventilen erzeugen. Werden die Turbinen aber ungeregelt betrieben, so schwankt die eingespeiste Energie, was zu unerwünschten Frequenzschwankungen des Bordnetzes führt.

Der vorliegenden Erfindung liegt die Aufgabe zugrunde, eine Vorrichtung zum Schiffsantrieb mit einem Dieselmotor, der in Drehverbindung mit einem Generator steht, welcher, durch einen Motor-Umrichter und durch einen Bordnetz-Umrichter mit einem Gleichspannungs-Zwischenkreis dazwischen mit dem Bordnetz in Verbindung, entweder Energie ins Bordnetz einspeist oder der als Hilfsmotor vom Bordnetz versorgt, den Dieselmotor unterstützt, und mit einer vom Abgas des Dieselmotors gespeisten Abgasturbine und/oder einer von seiner Abwärme gespeisten Dampfturbine, die einen Turbogenerator antreiben, zu schaffen, deren Wirkungsgrad verbessert ist.

Diese Aufgabe wird von einer Vorrichtung mit den Merkmalen des Anspruchs 1 gelöst. Bevorzugte Ausgestaltungen sind in den Unteransprüchen angegeben.

Eine erfindungsgemäße Vorrichtung zum Schiffsantrieb hat einen Dieselmotor (die sogenannte Hauptmaschine des Schiffes), der mit einer Schiffsantriebswelle sowie mit einem Generator in Drehverbindung steht. Der Generator steht durch einen Motor-Umrichter und durch einen Bordnetz-Umrichter - mit einem Gleichspannungs-Zwischenkreis dazwischen - mit dem Bordnetz in Verbindung und speist entweder Energie ins Bordnetz ein, oder er unterstützt als Hilfsmotor, vom Bordnetz versorgt, den Dieselmotor. Diese Vorrichtung hat zudem eine vom Abgas des Dieselmotors gespeiste Abgasturbine und/oder eine von seiner Abwärme gespeiste Dampfturbine, die einen Turbogenerator antreiben.

Erfindungsgemäß ist die Energieabgabe des Turbogenerators in den Spannungs-Zwischenkreis des Motor- und Bordnetz-Umrichters eingespeist.

Vorzugsweise ist die Energieabgabe und Drehzahlregelung des Turbogenerators über seine Erregereinrichtung gesteuert. Eine Alternative ist zum Beispiel eine Regelung über die Spannung des Zwischenkreises, die vom Motorumrichter vorgegeben wird.

Wenn eine vom Abgas des Dieselmotors gespeiste Abgasturbine sowie eine von seiner Abwärme gespeiste Dampfturbine den Turbogenerator gemeinsam antreiben, können diese Turbinen über Getriebestufen "auf einen gemeinsamen Wellenstrang arbeiten". Sie können über Getriebestufen mit einer gemeinsamen Turbogenerator-Antriebswelle in Drehverbindung stehen.

Vorzugsweise ist die Drehzahl des Turbogenerators im Teillastbereich mittels der Erregereinrichtung so geregelt, dass mindestens eine der Turbinen gemäß ihrer Drehzahl-Leistungs-Charakteristik im Betriebspunkt maximaler Energieerzeugung arbeitet. Die Drehzahl-Leistungs-Charakteristik für eine Turbine ist, üblicherweise in einem entsprechenden Diagramm aus Leistung über Drehzahl als Kennfeld dargestellt, die Abhängigkeit ihrer Leistung von ihrer Drehzahl.

Eine der schon erwähnten Getriebestufen zwischen der Abgasturbine und der Dampfturbine kann so eingestellt oder einstellbar sein, dass sogar beide Turbinen gemäß ihrer Drehzahl-Leistungs-Charakteristik im Betriebspunkt maximaler Energieerzeugung arbeiten.

Vorzugsweise ist der Motorumrichter so geregelt, dass die Spannung des Gleichspannungs-Zwischenkreises konstant ist. Die Energie zum boostern des Dieselmotors (Unterstützen mittels des Generators als Hilfsmotor) oder zum Liefern von Bordnetzenergie wird entsprechend geregelt.

Besonders bevorzugt wird der Netzumrichter mit seiner Blindlaststatik und seiner Wirklaststatik am Bordnetz "gefahren". Das heißt, daran angeschlossen, kann er parallellauffähig mit weiteren Dieselgeneratoren sein. Das Powermanagement des Gesamtsystems kann den Energiefluss des Netzumrichters so regeln, dass je nach Bedarf und wirtschaftlichen Optimierungskriterien zusätzlich zum Turbogenerator Energie in den Zwischenkreis eingespeist wird oder die Energie des Turbogenerators und/oder des Motorumrichters das Bordnetz speist.

Die Erfindung ist im Wesentlichen darauf gerichtet, die Abgas- und die Dampfturbine so zu fahren, dass die Energieausnutzung optimal erreicht wird. Dazu kann auf zusätzliche Regelventile verzichtet werden. Denn mit dem Einsatz von Drosselventilen ist immer ein Wirkungsgradverlust verbunden. Auch aufwändige Ausgleichsvorgänge über das Bordnetz lassen sich ebenfalls vermeiden, denn die Energie wird in den Spannungs-Zwischenkreis des vorhandenen Wellengenerators / Boostermotors eingespeist. Darüber hinaus kann der Turbogenerator nunmehr drehzahlvariabel gefahren werden. Er hängt nicht am Netz mit starrer Netzfrequenz, sondern der Energiefluss kann über die Erregung des Turbogenerators eingestellt werden. Dies ergibt einen Freiheitsgrad, um die Drehzahl-Leistung-Charakteristik der Turbinen in dem Betriebspunkt optimaler Leistungsabgabe zu fahren ohne dass ein weiterer Frequenzumrichter erforderlich ist.

Die Regelkreise der Komponenten Turbogenerator, Motorumrichter, Netzumrichter können autark arbeiten und müssen regelungstechnisch nicht aufeinander abgestimmt werden.

Der stabilisierende Faktor dabei ist der Motorumrichter. Er hält die Gleichspannung des Zwischenkreises im Wesentlichen konstant. Durch ihn lässt sich der Energiefluss so einstellen, dass 100% in den Hilfs- oder Boostermotor eingespeist werden, oder 100% Energie bezogen und in das Bordnetz eingespeist werden.

Energieschwankungen z. B. des Abgasgenerators brauchen nicht über das Bordnetz stabilisiert zu werden, sondern können über den Boostermotor ausgeglichen werden Die Rückwirkungen auf die Propellerwelle bleiben unbedeutend, da die Hauptmaschine vorzugsweise um ein Vielfaches stärker ist der Abgasturbo.

Die Erregereinrichtung des Turbogenerators kann so eingestellt sein, dass bei konstanter Gegenspannung die Leistungsabgabe in einem zugelassenen Drehzahlbereich frei geregelt wird, da der Motorumrichter in der Regel immer in der Lage ist, die Leistung des Turbogenerators in den Boostermotor einzuspeisen.

Der Netzumrichter funktioniert vorzugsweise wie ein Wellengenerator, der die niedrige schwankende Frequenz der Propellerwelle in eine konstante Netzfrequenz wandelt. Er liefert sowohl Blind- als auch Wirklast ins Bordnetz. Damit kann in einem weiten Betriebsbereich die Bordnetzenergie aus Turbogeneratoren und Wellengenerator gespeist werden. Ebenfalls erlaubt das Betriebskonzept, den Hilfsmotor zu speisen (Boosterbetrieb).

Weitere Vorteile, Ausgestaltungen und Details der Erfindung werden im Folgenden in der Beschreibung von Ausführungsbeispielen mit Bezug auf die beigefügten Figuren beschrieben:
- **Figur 1**: zeigt eine schematische Ansicht einer Vorrichtung zum Schiffsantrieb nach dem Stand der Technik und
- **Figur 2**: zeigt eine schematische Ansicht einer erfindungsgemäßen Vorrichtung zum Schiffsantrieb.

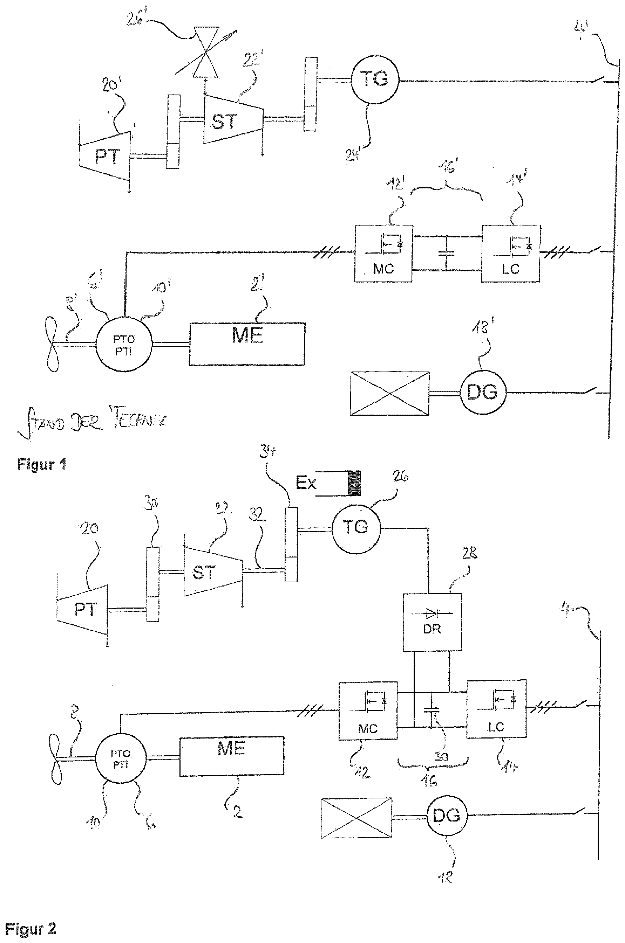

Moderne Dieselmotoren 2 für Schiffsantriebe wie in Fig. 1 und 2 haben Wirkungsgrade von ungefähr 50%.

Etwa 25% der Primärenergie würde in der Abgaswärme verloren gehen. Die Rückgewinnung dieser Energie wird schon seit Jahrzehnten erfolgreich verwirklicht wie zum Beispiel gemäß Fig. 1. So kann im Schiffsbetrieb diese Energie zur Speisung des Bordnetzes 4' genutzt werden oder auch mit einem Hilfsmotor 6', einem sogenannten Booster-Motor die Welle zusätzlich antreiben.

So hat eine herkömmliche Vorrichtung zum Schiffsantrieb einen Dieselmotor 2' (die sogenannte Hauptmaschine des Schiffes), der mit einer Schiffsantriebswelle 8' sowie mit einem Generator 10' in Drehverbindung steht. Der Generator steht durch einen Motor-Umrichter 12' und durch einen Bordnetz-Umrichter 14' - mit einem Gleichspannungs-Zwischenkreis 16' dazwischen - mit dem Bordnetz in Verbindung und speist entweder Energie ins Bordnetz 4' ein, oder er unterstützt (als der besagte Hilfsmotor 6'), vom Bordnetz 4' versorgt, den Dieselmotor 2'. Auch zusätzliche Dieselgeneratoren 18' können das Bordnetz 4' speisen, zum Beispiel wenn die Hauptmaschine 2' nicht in Betrieb ist.

Diese Vorrichtung hat zudem eine vom Abgas des Dieselmotors 2' gespeiste Abgasturbine 20' und eine von seiner Abwärme gespeiste Dampfturbine 22', die einen Turbogenerator 24' antreiben. Die dabei im Stand der Technik gemäß Fig. 1 betriebsbedingten Energieschwankungen der Turbinen 20', 22' sind jedoch im Bordnetz 4 nicht gewünscht. Darum werden üblicherweise zusätzliche Regelventile 26'(dargestellt beispielsweise an der Dampfturbine 22') eingesetzt, um den Turbinengenerator 24' nicht mit zu schnellen Lastschwankungen zu betreiben. Nachteilig sind dabei aber zum Beispiel die Wirkungsgradverluste, die die Druckverluste an den Regelventilen 26' erzeugen. Werden die Turbinen 20', 22' aber ungeregelt betrieben, so schwankt die eingespeiste Energie, was zu unerwünschten Frequenzschwankungen des Bordnetzes führt.

Auch eine erfindungsgemäße Vorrichtung nach Fig. 2 zum Schiffsantrieb hat einen Dieselmotor 2 (die sogenannte Hauptmaschine des Schiffes), der mit einer Schiffsantriebswelle 8 sowie mit einem Generator 10 in Drehverbindung steht. Auch hier steht der Generator 10 durch einen Motor-Umrichter 12 und durch einen Bordnetz-Umrichter 14 - mit einem Gleichspannungs-Zwischenkreis 16 dazwischen - mit dem Bordnetz in Verbindung und speist entweder Energie ins Bordnetz 4 ein, oder er unterstützt als Hilfsmotor 6, vom Bordnetz 4 versorgt, den Dieselmotor 2. Auch diese Vorrichtung hat zudem eine vom Abgas des Dieselmotors 2 gespeiste Abgasturbine 20 und eine von seiner Abwärme gespeiste Dampfturbine 22, die einen Turbogenerator 24 antreiben.

Dagegen aber ist erfindungsgemäß nach Fig. 2 die Energieabgabe des Turbogenerators 24 (zum Beispiel über einen Diodengleichrichter 28 in den Spannungs-Zwischenkreis 16 (mit Kondensator 30) des Motor-Umrichters 12 und Bordnetz-Umrichters 14 eingespeist, und nicht direkt ins Bordnetz 4.

Die Abgasturbine 20 und die Dampfturbine 22 treiben den Turbogenerator 24 gemeinsam an und arbeiten über Getriebestufen 30 "auf eine gemeinsame Welle" 32. Sie stehen über Getriebestufen 34 mit einer gemeinsamen Turbogenerator-Antriebswelle 36 in Drehverbindung.

Vorzugsweise ist die Drehzahl des Turbogenerators 24 im Teillastbereich mittels seiner Erregereinrichtung 36 so geregelt, dass die über die Getriebe 30 gekoppelten Turbinen 20, 22 gemäß ihrer Drehzahl-Leistungs-Charakteristik im Betriebspunkt maximaler Energieerzeugung arbeiten.

Die Getriebestufen 30 zwischen der Abgasturbine und der Dampfturbine sind so eingestellt, dass sogar beide Turbinen 20, 22 gemäß ihrer Drehzahl-Leistungs-Charakteristik im Betriebspunkt maximaler Energieerzeugung arbeiten.

Der Motorumrichter 12 ist so geregelt, dass die Spannung des Gleichspannungs-Zwischenkreises 16 konstant ist. Die Energie zum Boostern des Dieselmotors 2 (Unterstützen mittels des Generators 10 als Hilfsmotor 6) oder zum Liefern von Bordnetzenergie wird entsprechend geregelt.

Der Netzumrichter 14 wird mit seiner Blindlaststatik und seiner Wirklaststatik am Bordnetz 4 "gefahren". Das heißt, er ist daran angeschlossen und parallellauffähig mit weiteren Dieselgeneratoren 18. Das Powermanagement (nicht dargestellt) des Gesamtsystems regelt den Energiefluss des Netzumrichters 14 so, dass je nach Bedarf und wirtschaftlichen Optimierungskriterien zusätzlich zum Turbogenerator 24 Energie aus dem Bordnetz 4 in den Zwischenkreis eingespeist wird oder die Energie des Turbogenerators 24 und/oder des Motorumrichters 12 das Bordnetz 4 speist.

Die Erfindung ist im Wesentlichen darauf gerichtet, die Abgasturbine 20 und die Dampfturbine 22 so zu fahren, dass die Energieausnutzung optimal erreicht wird. Dazu kann auf zusätzliche Regelventile (Fig. 1) verzichtet werden. Auch aufwändige Ausgleichsvorgänge über das Bordnetz 4 lassen sich ebenfalls vermeiden, denn die Energie wird in den Spannungs-Zwischenkreis 16 des vorhandenen Wellengenerators 10 / Boostermotors 6 eingespeist. Darüber hinaus kann der Turbogenerator 24 nunmehr drehzahlvariabel gefahren werden. Er hängt nicht am Netz 4 mit starrer Netzfrequenz, sondern der Energiefluss kann über den Turbogenerator eingestellt werden, zum Beispiel über seine Erregung. Dies ergibt einen Freiheitsgrad, um die Drehzahl-Leistung-Charakteristik der Turbinen 20, 22 in dem Betriebspunkt optimaler Leistungsabgabe zu fahren, ohne dass zum Beispiel ein weiterer Frequenzumrichter zwischen Turbogenerator 24' und Bordnetz 4 (Fig. 1) erforderlich wäre.

Die Regelkreise der Komponenten Turbogenerator 24, Motorumrichter 12, Netzumrichter 14können autark arbeiten und müssen regelungstechnisch nicht aufeinander abgestimmt werden.

Der stabilisierende Faktor dabei ist der Motorumrichter 12. Er hält die Gleichspannung des Zwischenkreises 16 im Wesentlichen konstant. Durch ihn lässt sich der Energiefluss so einstellen, dass die Energie in den Hilfs- oder Boostermotor 6 eingespeist wird, oder Energie bezogen und in das Bordnetz 4 eingespeist wird.

Energieschwankungen z. B. des Abgasgenerators 20 brauchen nicht über das Bordnetz 4 stabilisiert zu werden, sondern können über den Boostermotor 6 ausgeglichen werden. Die Rückwirkungen auf die Propellerwelle 8 bleiben unbedeutend, da die Hauptmaschine 2 um ein Vielfaches stärker ist der Abgasturbo 20.

Die Erregereinrichtung des Turbogenerators 20 kann so eingestellt sein, dass bei konstanter Gegenspannung die Leistungsabgabe in einem zugelassenen Drehzahlbereich frei geregelt wird, da der Motorumrichter 12 aufgrund seiner Auslegung in der Regel immer in der Lage ist, die Leistung des Turbogenerators 24 in den Boostermotor 6 einzuspeisen.

Der Netzumrichter 14 funktioniert wie ein Wellengenerator, der die niedrige schwankende Frequenz der Propellerwelle 8 in eine konstante Netzfrequenz wandelt. Er liefert sowohl Blind- als auch Wirklast ins Bordnetz 4. Damit kann in einem weiten Betriebsbereich die Bordnetzenergie aus Turbogenerator 24 und Wellengenerator 10 gespeist werden. Ebenfalls erlaubt das Betriebskonzept, den Hilfsmotor 6 zu speisen (Booster-Betrieb).

## Patentansprüche

1. Vorrichtung zum Schiffsantrieb
- mit einem Dieselmotor, der mit einer Schiffsantriebswelle in Drehverbindung steht sowie mit einem Generator, der, durch einen Motor-Umrichter und durch einen Bordnetz-Umrichter mit einem Gleichspannungs-Zwischenkreis dazwischen mit dem Bordnetz in Verbindung, entweder Energie ins Bordnetz einspeist oder der als Hilfsmotor vom Bordnetz versorgt, den Dieselmotor unterstützt, und
- mit einer vom Abgas des Dieselmotors gespeisten Abgasturbine und/oder einer von seiner Abwärme gespeisten Dampfturbine, die einen Turbogenerator antreiben,
- **dadurch gekennzeichnet, dass** die Energieabgabe des Turbogenerators in den Spannungs- Zwischenkreis des Motor- und Bordnetz-Umrichters eingespeist ist.

2. Vorrichtung nach Anspruch 1, **dadurch gekennzeichnet, dass** die Energieabgabe und Drehzahlregelung des Turbogenerators über seine Erregereinrichtung gesteuert wird.

3. Vorrichtung nach Anspruch 2, **dadurch gekennzeichnet, dass** eine vom Abgas des Dieselmotors gespeiste Abgasturbine sowie eine von seiner Abwärme gespeiste Dampfturbine den Turbogenerator antreiben und dass diese dazu über Getriebestufen mit einer gemeinsamen Turbogenerator-Antriebswelle in Drehverbindung stehen.

4. Vorrichtung nach einem der vorhergehenden Ansprüche, **dadurch gekennzeichnet, dass** die Drehzahl des Turbogenerators im Teillastbereich mittels der Erregereinrichtung so geregelt ist, dass mindestens eine der Turbinen gemäß ihrer Drehzahl-Leistungs-Charakteristik im Betriebspunkt maximaler Energieerzeugung arbeitet.

5. Vorrichtung nach Anspruch 3 und 4, **dadurch gekennzeichnet, dass** eine Getriebestufe zwischen der Abgasturbine und der Dampfturbine so eingestellt oder einstellbar ist, dass beide Turbinen gemäß ihrer Drehzahl-Leistungs-Charakteristik im Betriebspunkt maximaler Energieerzeugung arbeiten.

6. Vorrichtung nach einem der vorhergehenden Ansprüche, **dadurch gekennzeichnet, dass** der Motorumrichter so geregelt ist, dass die Spannung des Gleichspannungs-Zwischenkreises konstant ist.

7. Vorrichtung nach einem der vorhergehenden Ansprüche, **dadurch gekennzeichnet, dass** der Netzumrichter mit seiner Blindlaststatik und seiner Wirklaststatik Energie in das Bordnetz liefert oder Energie vom Bordnetz bezieht.

## Claims

1. Device for marine propulsion
- having a diesel engine which is in rotational connection with a marine propulsion shaft and having a generator which, due to an engine converter and due to an on-board power supply converter with a direct-voltage link circuit therebetween in connection with the on-board power supply, either feeds energy into the on-board power supply or which as an auxiliary engine supplied by the on-board power supply, supports the diesel engine, and
- having a waste-gas turbine fed by the waste gas of the diesel engine and/or a steam turbine fed by its waste heat, which drive a turbogenerator,
- **characterised in that** the energy release of the turbogenerator is fed into the voltage link circuit of the engine converter and on-board power supply converter.

2. Device according to claim 1, **characterised in that** the energy release and rotational speed regulation of the turbogenerator is controlled via its energising device.

3. Device according to claim 2, **characterised in that** a waste-gas turbine fed by the waste gas of the diesel engine and a steam turbine fed by its waste heat drive the turbogenerator, and **in that** the latter are thus in rotational connection with a common turbogenerator drive shaft via transmission steps.

4. Device according to one of the preceding claims, **characterised in that** the rotational speed of the turbogenerator in the partial-load region is regulated by means of the energising device so that at least one of the turbines operates according to its rotational speed-power characteristic at the operating point of maximum energy generation.

5. Device according to claim 3 and 4, **characterised in that** a transmission step between the waste-gas turbine and the steam turbine is adjusted or can be adjusted so that both turbines operate according to their rotational speed-power characteristic at the operating point of maximum energy generation.

6. Device according to one of the preceding claims, **characterised in that** the engine converter is regulated so that the voltage of the direct-voltage link circuit is constant.

7. Device according to one of the preceding claims, **characterised in that** the power supply converter with its reactive-load statics and its active-load statics delivers energy to the on-board power supply or draws energy from the on-board power supply.

## Revendications

1. Dispositif destiné à la propulsion d'un navire
- avec un moteur diesel, qui est en relation de rotation avec un arbre moteur de navire, ainsi qu'avec un générateur, qui, par le biais d'un convertisseur de moteur et d'un convertisseur de réseau de bord en liaison avec le réseau de bord avec un circuit intermédiaire en tension continue intercalé soit fournit de l'énergie dans le réseau de bord soit en tant que moteur auxiliaire, alimenté par le réseau de bord, soutient le moteur diesel,
- et avec une turbine à gaz d'échappement alimentée par le gaz d'échappement du moteur diesel et/ou avec une turbine à vapeur alimentée par sa chaleur dissipée, lesquelles entraînent un turbogénérateur,
**caractérisé en ce que** la fourniture d'énergie du turbogénérateur est effectuée dans le circuit intermédiaire de tension du convertisseur de moteur et du convertisseur de réseau de bord.

2. Dispositif selon la revendication 1, **caractérisé en ce que** la fourniture d'énergie et la régulation de vitesse de rotation du turbogénérateur sont commandées par l'intermédiaire de son dispositif excitateur.

3. Dispositif selon la revendication 2, **caractérisé en ce qu'**une turbine à gaz d'échappement alimentée par le gaz d'échappement du moteur diesel ainsi qu'une turbine à vapeur alimentée par sa chaleur dissipée entraînent le turbogénérateur et celles-ci sont à cette fin en relation de rotation avec un arbre moteur de turbogénérateur commun par l'intermédiaire de rapports de démultiplication.

4. Dispositif selon l'une des revendications précédentes, **caractérisé en ce que** la vitesse de rotation du turbogénérateur est régulée dans la plage de charge partielle au moyen du dispositif excitateur de telle sorte qu'au moins l'une des turbines travaille selon sa caractéristique vitesse de rotation - puissance au point de fonctionnement de production d'énergie maximale.

5. Dispositif selon la revendication 3 ou 4, **caractérisé en ce qu'**un rapport de démultiplication entre la turbine à gaz d'échappement et la turbine à vapeur est réglé ou peut être réglé de telle sorte que les deux turbines travaillent selon leur caractéristique vitesse de rotation - puissance au point de fonctionnement de production d'énergie maximale.

6. Dispositif selon l'une des revendications précédentes, **caractérisé en ce que** le convertisseur de moteur est réglé de telle sorte que la tension du circuit intermédiaire en tension continue soit constante.

7. Dispositif selon l'une des revendications précédentes, **caractérisé en ce que** le convertisseur de réseau avec sa statique de charge réactive et sa statique de charge active fournit de l'énergie dans le réseau de bord ou tire de l'énergie du réseau de bord.
